# EUROPÄISCHE PATENTANMELDUNG

(11) **EP 1 903 356 A1**
(43) Veröffentlichungstag der Anmeldung: **26.03.2008**
(21) Anmeldenummer: 06019840.5
(22) Anmeldetag: 22.09.2006
(51) Int. Cl.: G01V 8/20

(54) **Lichtgitter**

(71) Anmelder: SICK AG, 79183 Waldkirch (DE)
(72) Erfinder: Brucker, Franz, 77716 Hofstetten (DE)
(74) Vertreter: Ludewigt, Christoph

(57) **Zusammenfassung**

Lichtgitter zur Absicherung eines Gefahrenbereiches einer Maschine und zur Erkennung von Objekten. Das Lichtgitter besteht dabei aus einer Sendeeinheit mit einzelnen Sendeelementen zum Aussenden einer Mehrzahl in einer Ebene verlaufender Lichtstrahlen, einer Steuereinheit zur separaten Ansteuerung der einzelnen Sendeelemente und einer zur Sendeeinheit beabstandeten Empfangseinheit mit einzelnen Empfangselementen zum Empfangen der Lichtstrahlen, wodurch zwischen der Sende- und Empfangseinheit ein Schutzfeld definiert ist. Weiter ist eine Auswerteeinheit zur separaten Ansteuerung und Auswertung der einzelnen Empfangselemente und zur Ausgabe eines Schaltsignals bei Lichtstrahlunterbrechung vorhanden. Zur Auswahl wenigstens eines der Sendeelemente ist ein Adressbus vorhanden, der mit der Steuereinheit und allen Sendeelementen verbunden ist und zur Auswahl und Auswertung wenigstens eines der Empfangselemente ist ein Adress- und Datenbus oder ein kombinierter Adress-Datenbus vorhanden, der mit der Auswerteeinheit und allen Empfangselementen verbunden ist und Mittel sind vorhanden zur Datenübertragung zwischen der Steuereinheit und der Auswerteeinheit.

## Beschreibung

Die Erfindung betrifft eine Vorrichtung nach dem Oberbegriff des Anspruchs 1 sowie ein Verfahren nach dem Oberbegriff des Anspruchs 7.

Aus der DE 43 05 559 A1 ist eine Anordnung und ein Verfahren zur Konturerkennung von auf einem Förderband mit gleichförmiger Fördergeschwindigkeit an einer optischen Abtasteinrichtung vorbeibewegten Flaschen bekannt. Die Abtasteinrichtung weist eine Gruppe von in unterschiedlicher Höhe über dem Förderband angeordneten, quer zur Förderrichtung ausgerichteten Lichtschranken auf, die mit einer von der Fördergeschwindigkeit abhängigen Wiederholfrequenz in mehreren Abtastzyklen abgetastet werden. Die Ausgangssignale der einzelnen Lichtschranken werden durch Vergleich mit einem vorgegebenen Schwellenwert in das Vorhandensein oder Nichtvorhandensein von Flaschen definierende digitale Zustandswerte umgeformt und zur Konturerkennung mit Referenzwerten verglichen.

Um bei gegebener Taktfrequenz eine Erhöhung einer Abtastfrequenz zu erzielen, kann es von Vorteil sein, wenn die für die Konturabtastung erforderliche Gruppe der Lichtschranken nach Art eines Messfensters aus einer Vielzahl von äquidistant angeordneten Sender-Empfänger-Paaren in Anpassung an die zu erfassende Gegenstandskontur ausgewählt werden. Dadurch kann die Zahl der für die Abtastung notwendigen Lichtschranken reduziert und die Wiederholfrequenz und damit auch die Fördergeschwindigkeit erhöht werden.

Die Aktivierung der Lichtschranken erfolgt durch einen Messcontroller über eine Logikeinheit, die auch zur Festlegung der Randbedingungen dient, wie ein Auslösen eines Messvorganges und eine Aktivierungsdauer eines Messvorgangs. Dabei wird jeweils ein mit einem Lichtsender verbundener Ausgang eines Demultiplexers und ein mit einem zugehörigen Lichtdetektor verbundener Eingang eines Multiplexers synchron adressiert und getriggert.

Nachteilig bei dieser Anordnung ist die Ansteuerung der Sender über den Demultiplexer und die Auswertung über den Multiplexer. Über den Multiplexer bzw. Demultiplexer ist jeweils immer nur ein einziger Sender oder ein einziger Lichtempfänger aktivierbar. Ein Multiplexer entspricht grundsätzlich einem einpoligen Umschalter mit zwei oder mehr Schalterstellungen. Der Multiplexer benötigt weiter zur Ansteuerung Adressleitungen und eine Triggerleitung. Abhängig von einer unterschiedlichen Strahlanzahl müssen verschiedene Multiplexer eingesetzt werden. Die Ausgänge des Demultiplexers, bzw. die Eingänge des Multiplexers müssen dabei immer an die Anzahl der Sender bzw. Empfänger angepasst werden.

Weiter ist aus der EP 1 281 986 A2 ein Verfahren zur Steuerung eines Lichtgitters bekannt, das zur Absicherung eines durch eine Werkzeugbewegung vorgegebenen Gefahrenbereichs einen Überwachungsbereich aufweist, der mit der Werkzeugbewegung aktiviert wird. Ein geschlossener Teilbereich des Überwachungsbereiches wird als ein aktives Feld aktiviert. Dieses aktive Feld wird innerhalb des Überwachungsbereichs derartig bewegt, dass der Gefahrenbereich während der Werkzeugbewegung zunächst lediglich teilweise gesichert ist.

Der Erfindung liegt die Aufgabe zugrunde, eine verbesserte Vorrichtung und ein verbessertes Verfahren bereitzustellen, mit der bzw. dem Ereignisse in einem Schutzfeld besser überwacht werden können.

Der auf eine Vorrichtung gerichtete Teil der Aufgabe wird erfindungsgemäß nach Anspruch 1 mit einem Lichtgitter zur Absicherung eines Gefahrenbereiches einer Maschine und zur Erkennung von Objekten gelöst. Das Lichtgitter besteht dabei aus einer Sendeeinheit mit einzelnen Sendeelementen zum Aussenden einer Mehrzahl in einer Ebene verlaufender Lichtstrahlen, einer Steuereinheit zur separaten Ansteuerung der einzelnen Sendeelemente und einer zur Sendeeinheit beabstandeten Empfangseinheit mit einzelnen Empfangselementen zum Empfangen der Lichtstrahlen, wodurch zwischen der Sende- und Empfangseinheit ein Schutzfeld definiert ist. Weiter ist eine Auswerteeinheit zur separaten Ansteuerung und Auswertung der einzelnen Empfangselemente und zur Ausgabe eines Schaltsignals bei Lichtstrahlunterbrechung vorhanden. Zur Auswahl wenigstens eines der Sendeelemente ist ein Adressbus vorhanden, der mit der Steuereinheit und allen Sendeelementen verbunden ist und zur Auswahl und Auswertung wenigstens eines der Empfangselemente ist ein Adress- und Datenbus oder ein kombinierter Adress-Datenbus vorhanden, der mit der Auswerteeinheit und allen Empfangselementen verbunden ist und Mittel sind vorhanden zur Datenübertragung zwischen der Steuereinheit und der Auswerteeinheit.

Durch den Adressbus bzw. Adress- und Datenbus können beliebige Sendeelemente bzw. Empfangselemente angesteuert werden. Hierbei können wenigstens ein oder mehrere Sendeelemente unabhängig, wahlfrei und/oder gleichzeitig angesteuert werden.

Lichtgitter werden in verschiedenen Längen und verschiedenen Auflösungen hergestellt. Dies führt zu unterschiedlichsten Strahlanzahlen in einem Lichtgitter. Bei dem erfindungsgemäßen Lichtgitter sind die Sendeelemente und Empfangselemente mit dem Adressbus bzw. Adress- und Datenbus verbunden. Der Adressbus bzw. Adress-/Datenbus ist hierbei universell für eine beliebige Strahlanzahl eines Lichtgitters einsetzbar. Eine Adressierung der einzelnen Sende- bzw. Empfangselemente kann dabei über die Steuer- bzw. Auswerteeinheit vorgenommen werden. Je nach dem, wie viele Sende- bzw. Empfangselemente angesteuert werden, wird ein Adressierungsbereich angepasst.

Zur abgestimmten Ansteuerung der Sendeelemente und Auswertung der Empfangselemente sind die Mittel zur Datenübertragung zwischen der Steuereinheit und der Auswerteeinheit vorhanden. Bei diesem Mittel kann es sich um eine Schnittstelle oder ein Bussystem handeln. Dadurch ist es möglich, den Empfang von Lichtsignalen in den Empfangselementen direkt mit dem Senden der Lichtsignale durch die Sendeelemente zu synchronisieren.

Vorteilhaft weist die Steuereinheit und/oder Auswerteeinheit einen Steuereingang auf, und die Auswerteeinheit ist derart ausgebildet, dass abhängig von einem Signal des Steuereingangs nur bestimmte Empfangselemente ansteuerbar und auswertbar sind und die Steuereinheit ist derart ausgebildet, dass entsprechend den bestimmten Empfangselementen nur die zugeordneten Sendeelemente ansteuerbar sind.

Dadurch ist es möglich, nur eine bestimmte begrenzte Anzahl korrespondierender Sende- und Empfangselemente für die Auswertung eines Teilbereiches des Schutzfeldes heranzuziehen. Diese Auswertung des Teilbereiches kann durch den Steuereingang eingeleitet werden. So ist es beispielsweise möglich, einen Steuerausgang einer Maschinensteuerung direkt mit der Steuer- bzw. Auswerteeinheit zu verbinden und damit die Auswertung des Schutzfeldes auf einen Teil des Schutzfeldes zu begrenzen. Dies ist beispielsweise dann sinnvoll, wenn nur in dem Teilbereich des Schutzfeldes ein Schutz vor einer gefahrbringenden Bewegung erfolgen muss.
Wird nur ein Teil des Schutzfeldes ausgewertet, so verringert sich mit geringerer Anzahl von auszuwertenden Empfangselementen die Auswertezeit für die einzelnen Empfangselemente und dadurch auch eine Ansprechzeit für ein Auslösen eines Schaltsignals zum Stopp einer gefahrbringenden Bewegung. Dadurch kann schneller auf einen Eingriff in dem entsprechenden Bereich des Schutzfeldes reagiert werden.

Hierzu können die Sendeelemente bzw. Empfangselemente zeitlich nacheinander angesteuert bzw. ausgewertet werden. Durch die Ansteuerung der Sende- bzw. Empfangselemente nacheinander ist eine eindeutige Zuordnung der Sendeelemente zu den Empfangselementen gegeben. Auch eine gegenseitige Beeinflussung benachbarter Stahlen kann durch die sequentielle Ansteuerung der Sende- bzw. Empfangselemente wirkungsvoll unterdrückt werden. Die Sende- bzw. Empfangselemente können dabei auch unabhängig von Ihrer Position durch den Adress- bzw. Adress-/Datenbus sequentiell angesteuert werden. So ist es zum Beispiel möglich, die Sende- bzw. Empfangselemente in einer bestimmten Reihenfolge anzusteuern. Dadurch kann eine gegenseitige Beeinflussung benachbarter Systeme weiter sehr wirkungsvoll unterdrückt werden.

Die Sendeelemente bzw. Empfangselemente können in Weiterbildung der Erfindung über den Adressbus bzw. den Adress-/Datenbus aber auch gleichzeitig angesteuert bzw. ausgewertet werden. Hierbei werden beispielsweise eine Gruppe oder alle Sende- bzw. Empfangselemente über eine Sammeladressierung gleichzeitig angesprochen.

Vorteilhaft ist es dadurch möglich, Sendeelemente und Empfangselemente, die sich optisch nicht gegenseitig beeinflussen können, gleichzeitig anzusteuern und auszuwerten. Dies ist zum Beispiel der Fall, wenn die entsprechenden Sende- bzw. Empfangselemente räumlich weit genug voneinander beabstandet angeordnet sind. Durch eine gleichzeitige Auswertung mehrerer gleichzeitig empfangener Lichtstrahlen kann auch die Ansprechzeit zur Abschaltung der gefahrbringenden Bewegung deutlich reduziert werden, oder eine von der Strahlanzahl unabhängige, beispielsweise konstante Ansprechzeit für verschiedene Lichtgitter realisiert werden. Ein Lichtgitter mit beispielsweise zehn Sende- bzw. Empfangselementen kann die gleiche Ansprechzeit aufweisen wie ein Lichtgitter mit beispielsweise zweihundertvierzig Sende- bzw. Empfangselementen, bei dem mehrere Sende- bzw. Empfangselemente gruppenweise gleichzeitig angesteuert bzw. ausgewertet werden.

In einer weiteren Ausführungsform sind die Mittel zur Datenübertragung zwischen der Steuereinheit und der Auswerteeinheit zur Funkübertragung oder zur optischen Übertragung ausgebildet. Dadurch ist es möglich, die Sendeelemente und die Empfangselemente getrennt voneinander anzubringen, ohne dass eine Verbindungsleitung dazwischen notwendig ist. Dies erleichtert einen flexiblen Einsatz des erfindungsgemäßen Lichtgitters erheblich. Bei der Montage muss im Fall einer optischen Übertragung lediglich eine Sichtverbindung zwischen der Sendeeinheit und der Empfangseinheit vorhanden sein. Bei einer Funkübertragung kann auch im Falle einer Unterbrechung der Sichtverbindung, beispielsweise bei Materialtransporten durch das Schutzfeld eine Datenübertragung zur Synchronisation oder zur Übertragung von Diagnoseinformationen zwischen der Steuer- und Auswerteeinheit ausgetauscht werden.

Die Mittel zur Datenübertragung zur leitungsgebundenen Übertragung sind in einer weiteren Ausführungsform mittels elektrischer Leitungen oder Lichtwellenleiter ausgebildet. Eine Verbindung mittels elektrischer Leitungen hat den Vorteil, dass diese einfach und preisgünstig zu realisieren ist. Eine Verbindung mittels optischer Lichtwellenleiter hat den Vorteil, dass sehr hohe Datenübertragungsraten möglich sind. Dadurch kann eine Vielzahl von Informationen zur Synchronisation oder Betriebseinstellung des Lichtgitters übertragen werden.

Der auf ein Verfahren gerichtete Teil der Aufgabe wird erfindungsgemäß nach Anspruch 7 dadurch gelöst, dass zur Absicherung eines Gefahrenbereiches einer Maschine und zur Erkennung von Objekten eine Mehrzahl in einer Ebene verlaufender Lichtstrahlen ausgesendet wird. Die Lichtstrahlen werden separat voneinander ausgesendet, die Mehrzahl in der Ebene verlaufende Lichtstrahlen werden empfangen, wodurch ein Schutzfeld entsteht, die empfangenen Lichtstrahlen werden separat voneinander ausgewertet und abhängig von einer Lichtstrahlunterbrechung wird ein Schaltsignal ausgegeben. Das Aussenden wenigstens eines Lichtstrahles erfolgt wahlfrei über einen Adressbus und der Empfang wenigstens eines Lichtstrahls erfolgt wahlfrei über einen Adress- und Datenbus oder einen kombinierten Adress-Datenbus und das Aussenden und Empfangen von Lichtstrahlen erfolgt zueinander koordiniert.

Durch ein wahlfreies Ansteuern der Sende- bzw. Empfangselemente können beliebige Lichtstrahlen zwischen den Sendeelementen und den Empfangselementen aktiviert werden. Abhängig von Unterbrechungen einzelner Lichtstrahlen können so beispielsweise Lichtstrahlen der benachbarten Sendeelemente aktiviert werden. Dadurch kann beispielsweise eine Kontur eines eindringenden Objektes sehr schnell detektiert werden, da ausgehend von der ersten Unterbrechung benachbarte, oder zeitlich nachfolgende Lichtstahlunterbrechungen sofort ausgewertet werden können. Durch das wahlfreie Ansteuern der Sende- bzw. Empfangselemente könnte beispielsweise zyklisch nur jedes zweite oder dritte Sendeelement und ein zugehöriges Empfangselement aktiviert werden. Hierdurch weist das Lichtgitter zunächst eine niedrige Auflösung zur Detektion von Objekten auf. Erfolgt ein Eindringen eines Objektes in das Schutzfeld, so wird abhängig von der ersten Lichtstrahlunterbrechung jedes Sendeelement und jedes zugehörige Empfangselemente zyklisch angesteuert und ausgewertet. Dadurch wird ab einem bestimmten Eingriff beispielsweise die Auflösung des Lichtgitters zur Detektion von Objekten erhöht. Dies ist sehr vorteilhaft bei der Erkennung von Konturen eines eintretenden Objekts. Durch die Ansteuerung mit reduzierter Auflösung kann das Schutzfeld sehr schnell zyklisch abgetastet werden. Erfolgt ein Eingriff in das Schutzfeld, kann nun durch die höhere Auflösung die Kontur eines Objektes sehr genau abgetastet und klassifiziert werden. Hierdurch kann sehr schnell zwischen zulässigen und unzulässigen Objekten unterschieden werden. Ein zulässiges Objekt führt hierbei nicht zu einem Schaltsignal, ein unzulässiges Objekt führt aber zu einem Schaltsignal und zur Abschaltung einer gefahrbringenden Bewegung. Zulässige Objekte sind beispielsweise Transportgüter.

In zweckmäßiger Weiterbildung der Erfindung werden zulässige Lichtstrahlunterbrechungen eingelernt, abhängig von der Auswertung und Unterbrechung nur bestimmter Lichtstrahlen wird ein Schaltsignal ausgegeben und die Aussendung von Lichtstrahlen und der Empfang bestimmter Lichtstrahlen wird gesteuert. Durch das Einlernen von zulässigen Lichtstrahlunterbrechungen können zulässige und unzulässige Objekte unterschieden werden. Zum Einlernen werden durch ein Objekt bestimmte Strahlen abgedeckt und gespeichert. Wird eine Abdeckung genau dieser Strahlen in einem bestimmungsgemäßen Betrieb der Lichtschranke erkannt, wird dieses Objekt als zulässig erkannt und kein Schaltsignal erzeugt. Aufgrund der Auswertung nur bestimmter Lichtstrahlen wird die Ansprechzeit zur Erkennung eines Objektes in dem betreffenden Bereich des Schutzfeldes reduziert.

Im Folgenden wird die Erfindung an Hand von Ausführungsbeispielen unter Bezugnahme auf die Zeichnung im Einzelnen erläutert.

### In der Zeichnung zeigt:

Figur 1
   eine schematische Darstellung eines erfindungsgemäßen Lichtgitters;
Figur 2
   eine schematische Darstellung einer Absicherung eines Gefahrenbereichs;
Figur 3 bis 5
   eine schematische Darstellung einer Konturerkennung mit dem erfindungsgemäßen Lichtgitter;
Figur 6 und 7
   eine schematische Darstellung eines Lichtgitters einer Gesenkbiegepresse.

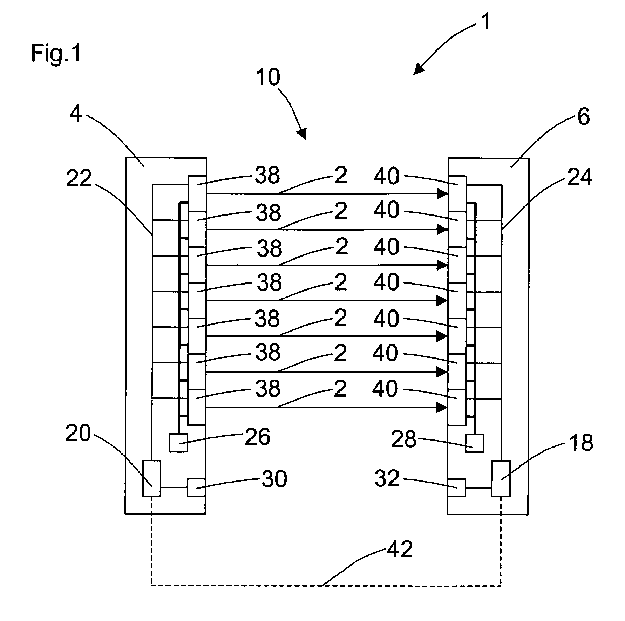

In Figur 1 ist ein erfindungsgemäßes Lichtgitter 1 schematisch dargestellt. Eine Sendeeinheit 4 enthält Sendeelemente 38, die nacheinander angeordnet sind. Jedes Sendeelement 38 ist mit einem Adressbus 22 verbunden, der wiederum mit einer Steuereinheit 20 verbunden ist. Über den Adressbus 22 können die Sendeelemente 38 wahlfrei einzeln oder mehrere Sendeelemente 38 gleichzeitig über die Steuereinheit 20 angesteuert werden. Die Sendeelemente 38 werden beispielsweise mit einer gemeinsamen Spannungsversorgung 26 über eine Spannungsversorgungsleitung versorgt. Die Steuereinheit 20 ist zusätzlich mit einem Steuereingang 30 verbunden, mit dessen Hilfe extern angelegte Steuersignale an die Steuereinheit 20 angelegt werden können.

Gegenüberliegend ist eine Empfangseinheit 6 mit nacheinander angeordneten Empfangselementen 40 dargestellt. Die Sendeelemente 38 und Empfangselemente 40 sind jeweils paarweise einander zugeordnet, wodurch zwischen der Sende- und Empfangseinheit ein Schutzfeld 10, bestehend aus Lichtstrahlen 2, gebildet ist. Die Empfangselemente 40 sind über einen gemeinsamen Adress- und Datenbus 24 oder einen kombinierten Adress-/Datenbus 24 miteinander verbunden. Ausgehend von einer Auswerteeinheit 18 können die Empfangselemente 40 wahlfrei angesteuert und ausgewertet werden. Weiter können die Empfangselemente 40 auch über eine Spannungsversorgung 28 und eine gemeinsame Versorgungsleitung versorgt werden. Zusätzlich weist die Auswerteeinheit 18 auch einen Steuereingang 32 auf, über den externe Steuersignale eingespeist werden können zur Auswertung bestimmter Strahlen der Auswerteeinheit 18.

Eine Auswertung der Empfangselemente 40 findet dabei abgestimmt mit der Ansteuerung der Sendeelemente 38 statt. Hierzu ist die Steuereinheit 20 mit der Auswerteeinheit 18 mit Mitteln zur Datenübertragung 42 verbunden. Hierbei kann es sich um eine leitungsgebundene Verbindung oder um eine optische Verbindung handeln. Weiterhin kann es sich hier auch um eine Funkverbindung handeln, um Daten zur Synchronisation auszutauschen oder Daten zur Auswahl bestimmter Paare von Sende- und Empfangselemente 38 und 40 zwischen der Steuereinheit 20 und der Auswerteeinheit 18 auszutauschen.

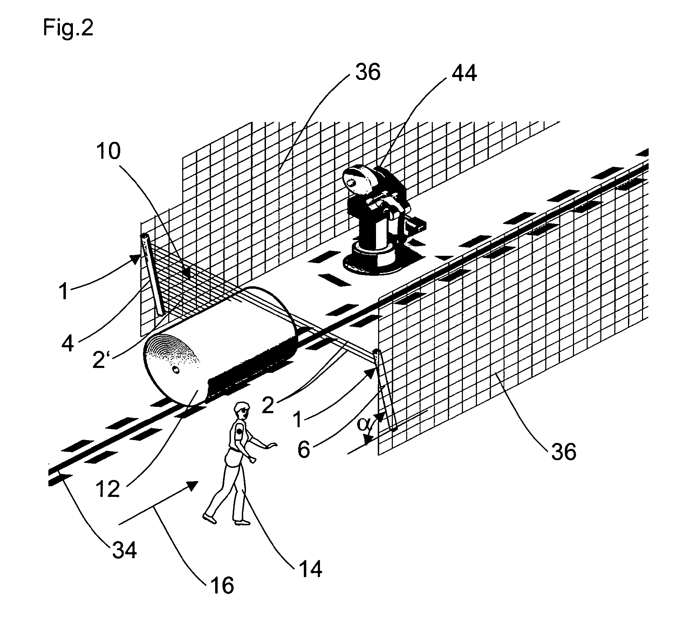

Figur 2 zeigt in einem Applikationsbeispiel eine Absicherung eines Gefahrenbereichs mit einem erfindungsgemäßen Lichtgitter 1 aus Figur 1 zur Durchführung des erfindungsgemäßen Verfahrens. Ein Objekt 12, z. B. eine Papierrolle 12, wird auf einer Transportvorrichtung 34 in Richtung 16 einer Maschine 44 bewegt zur weiteren Bearbeitung des Objektes 12. Die Maschine 44 führt dabei im Gefahrenbereich eine gefahrbringende Bewegung aus, die für eine Person 14 im Bereich der Maschine 44 eine Verletzungsgefahr darstellt.

Der Transport des Objektes 12 erfolgt ohne Überwindung von mechanischen Barrieren zu der Maschine 44. Zur Zutrittsabsicherung sind an zwei Seiten der Maschine 44 Sperrgitter 36 angebracht, um den unzulässigen Zugang zu dem Gefahrenbereich an die Maschine 44 abzusperren. Um den Zugang zu dem Gefahrenbereich zum Schutz der Person 14 zu überwachen und gleichzeitig den Transport des Objektes 12 zu ermöglichen, ist das erfindungsgemäße Lichtgitter 1 zu beiden Seiten des Transportweges angebracht.

Das Lichtgitter 1 ist, wie in Figur 1 beschrieben, so aufgebaut, dass durch die ausgesendeten Lichtstrahlen 2 zwischen Sendeeinheit 4 und Empfangseinheit 6 das Schutzfeld 10 gebildet ist. Werden einzelne Lichtstrahlen 2' unterbrochen, so wird das Schutzfeld 10 zwischen der Sendeeinheit 4 und der Empfangseinheit 6 verletzt.

Die Sendeeinheit 4 und die Empfangseinheit 6 sind dabei beispielsweise in einem Winkel α zur Bewegungsrichtung des Objektes 12 geneigt. Das Lichtgitter 1 bzw. die zugehörige Auswerteeinheit 18 sind dabei so programmiert, dass zulässige Objekte, die das Lichtgitter 1 passieren dürfen, definiert sind, beispielsweise mittels ihrer Kontur. Ein solches zulässiges Objekt 12 kann beispielsweise das Objekt 12 mit geschlossener Umfangskontur sein, wie die Papierrolle 12. Durch das im Winkel α angeordnete Lichtgitter 1, unterbricht das Objekt 12, mit im Wesentlichen senkrechten Eintrittsflächen, nebeneinanderliegende Lichtstrahlen 2' des Lichtgitters 1.

Die Papierrolle 12 tritt zunächst mit der in Bewegungsrichtung 16 zeigenden oberen Kante in das Schutzfeld 10 ein und unterbricht damit einen Lichtstrahl 2'. Während der weiteren Bewegung der Papierrolle 12 werden weitere benachbarte Lichtstrahlen 2' durch das Objekt 12 unterbrochen. Es handelt sich dabei um einen zusammenhängenden Bereich nebeneinander liegender Lichtstrahlen 2'. Beim Unterbrechen weiterer Lichtstrahlen 2, die nicht neben den bereits durch das Objekt 12 unterbrochenen Lichtstrahlen 2' liegen, würde eine unerlaubte Verletzung des Schutzfeldes 10 vorliegen und das Lichtgitter 1 mit einer Schalteinheit die gefahrbringende Bewegung der Maschine 44 stillsetzen. Die Person 14 wird aufgrund ihrer unregelmäßigen Umfangskontur andere Lichtstrahlen unterbrechen und wird deshalb als unzulässig erkannt.

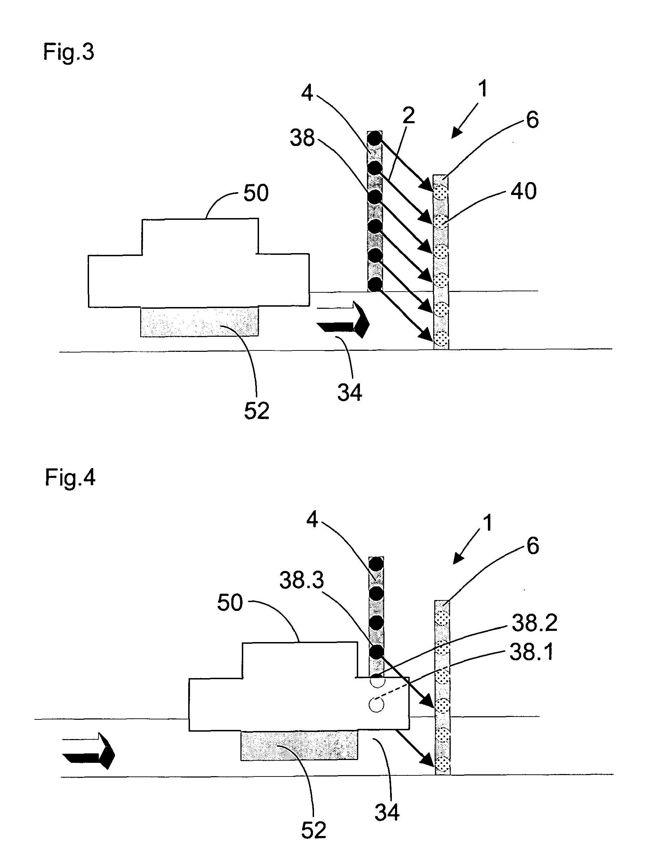

Das Verfahren und das Lichtgitter 1 zur Sicherheitsüberwachung eines Gefahrenbereichs sind in einem weiteren Ausführungsbeispiel nach Figur 3 anhand eines Durchgangs erläutert, durch welchen Fahrzeugkarosserien 50 beispielsweise in eine Montagezelle transportiert werden. Auf einer in Richtung des eingezeichneten Pfeils laufender Transportvorrichtung 34 sind Transporteinrichtungen 52 angeordnet, die jeweils eine Karosserie 50 tragen. Die Transportvorrichtung 52 läuft durch einen Durchgang, der durch das erfindungsgemäße Lichtgitter 1 abgesichert ist. Das Lichtgitter 1 besteht aus der Sendeeinheit 4 mit übereinander angeordneten Sendeelementen 38 und einer gegenüber auf der anderen Seite des Durchgangs angeordneten entsprechenden Empfangseinheit mit übereinander angeordneten Empfangselementen 40. Die Sendeelemente 38 senden parallel übereinander beabstandet horizontal verlaufende Lichtstrahlen 2 aus, die in den jeweils zugeordneten Empfangselementen 40 empfangen werden. In der Figur weist das Lichtgitter 1 zur schematischen Erläuterung nur einige wenige Lichtstrahlen 2 auf. In der Praxis werden Lichtgitter 1 verwendet, die eine wesentlich größere Anzahl von Lichtstrahlen 2 mit einem entsprechend geringen vertikalen Abstand aufweisen, um ein Lichtgitter 1 mit hoher Auflösung zu erhalten. In der Praxis werden Lichtgitter 1 verwendet, die je nach Höhe bis zu zweihundertvierzig Lichtstrahlen 2 aufweisen. Wie in Figur 3 gezeigt, werden zunächst bei freiem Schutzfeld alle Sendeelemente 38 in der Sendeeinheit 4 über den Adressbus 22 angesteuert und über den Adress-/Datenbus in der Empfangseinheit 6 durch die Auswerteeinheit 18 ausgewertet.

In Figur 4 ist die gleiche Szene aus Figur 3 zu einem späteren Zeitpunkt dargestellt. Die Karosserie 50 ist durch die Transportvorrichtung 34 in den Bereich des Schutzfeldes transportiert worden. Durch die Kontur der Karosserie 50 wurden zunächst die Sendeelemente 38.1 und 38.2 abgedeckt. Diese Abdeckung wird aufgrund einer vorher eingelernten Kontur der Karosserie 50 als zulässig erkannt. Dabei wird die Position und die Anzahl der Empfangselemente 40.1 bis 40.6 ausgewertet, die keine Lichtstrahlen 2 empfangen. Daraufhin werden über den Adressbus nur noch zusätzlich zu dem Empfangselement 40.2 die Empfangselemente 40.1 und 40.3 ausgewertet. Die übrigen Sendeelemente 38.4 bis 38.6 werden nicht angesteuert. Dementsprechend werden die Empfangselemente 40.4 bis 40.6 nicht ausgewertet. Durch das Aussenden einer nur begrenzten Strahlanzahl und der entsprechenden Auswertung der zugehörigen Empfangselemente kann eine Auswertung schneller erfolgen und dadurch die Kontur schneller abgetastet werden. Ändert sich die Kontur weiter, werden die zur Auswertung benötigten Sende- 38.1 bis 38.6 und Empfangselemente 40.1 bis 40.6 weiter durch die Steuer- und Auswerteeinheit über den Adress- bzw. Adress-/Datenbus entsprechend angesteuert.

Eine Umschaltung der betreffenden Empfangselemente 40.1 bis 40.6, die zur Auswertung vorgesehen sind, kann auch über einen Steuereingang erfolgen, der an dem Lichtempfänger vorhanden ist. Entsprechend kann hierzu auch ein Steuereingang an der Sendeeinheit vorgesehen sein. Informationen zur Umschaltung der Ansteuerung bzw. Auswertung der Sende- bzw. Empfangselemente 38.1 bis 38.6 und 40.1. bis 40.6 können durch eine Datenübertragungseinrichtung in Form einer Datenleitung zwischen der Sendeeinheit 4 und der Empfangseinheit 6 bidirektional ausgetauscht werden. Sollen beispielsweise verschiedene Karosserien 50 mit verschiedenen Formen als zulässige Objekte passieren dürfen, so kann über eine übergeordnete Maschinensteuerung eine solche Umschaltung erfolgen.

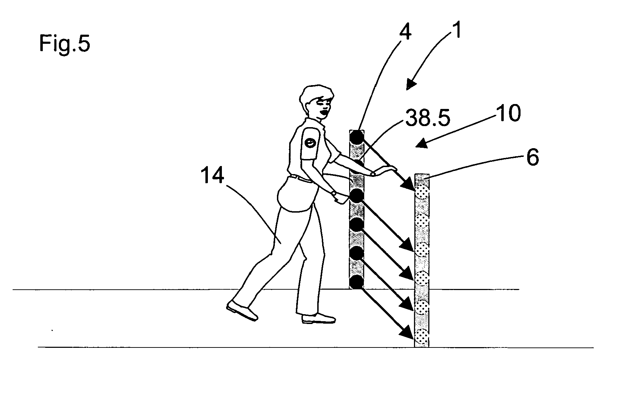

In Figur 5 ist dieselbe Anordnung aus Figur 3 bzw. Figur 4 gezeigt. Das Lichtgitter 1 wurde, wie bereits in Figur 4 erläutert, mit der Kontur der Karosserie als zulässiges Objekt eingelernt. Wie in Figur 5 dargestellt, erfolgt ein unbeabsichtigtes Eindringen der Person 14 in das Schutzfeld. Dabei werden die Lichtstrahlen des Sendeelementes 38.5 durch den Arm der Person 14 unterbrochen. Diese Unterbrechung wird von der Auswerteeinheit aufgrund der eingelernten Kontur als unzulässig erkannt. Daraufhin wird ein Schaltsignal erzeugt, um zum Schutz der Person 14 eine gefahrbringende Bewegung der Maschine abzuschalten. Über den Steuereingang können auch verschiedene Betriebsarten des Lichtgitters 1 umgeschaltet werden. So kann das Lichtgitter 1 in einer ersten Betriebsart ausschließlich zum Schutzbetrieb, also zur Erkennung unerlaubter Eingriffe eingestellt werden und in einer weiteren Betriebsart zum Schutzbetrieb und gleichzeitig zur Erkennung von zulässigen Objekten, wie in den Figuren 3 bis 4 beschrieben, eingestellt werden.

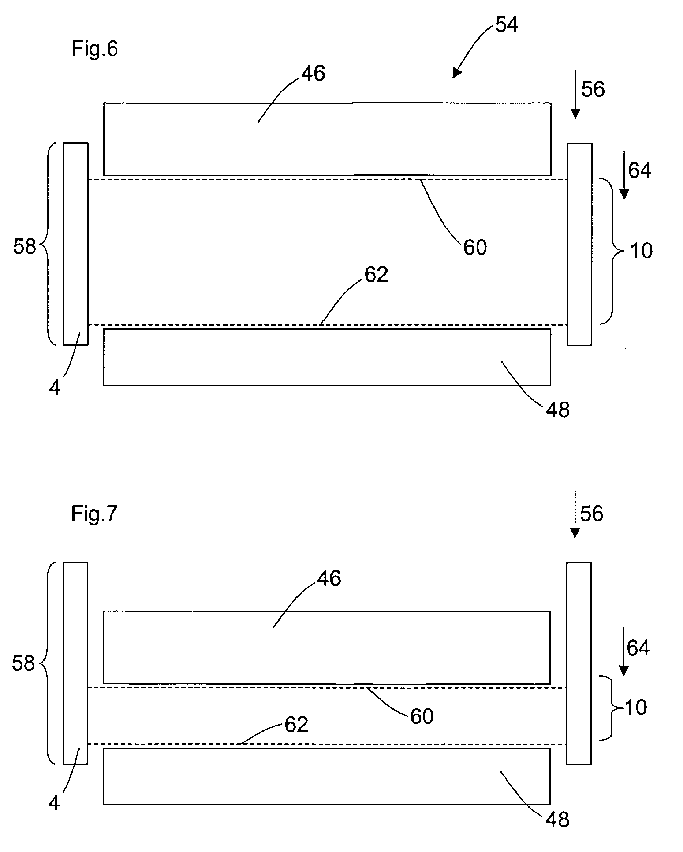

Fig. 6 und 7 zeigen das erfindungsgemäße Lichtgitter und das erfindungsgemäße Verfahren, wie es an einer Gesenkbiegepresse 54 eingesetzt werden kann. Die Gesenkbiegepresse 54 besitzt zwei Werkzeugteile, nämlich ein Oberwerkzeug 46 und ein Unterwerkzeug 48. Das Unterwerkzeug 48 befindet sich auf einem Maschinentisch (nicht dargestellt). Zur Ablage eines Werkstücks dienen Auflage- und Biegehilfen (nicht dargestellt). Das Oberwerkzeug 46 ist zu einer vertikal nach unten gerichteten Schließbewegung 56 antreibbar, um letztlich ein Werkstück, beispielsweise ein Blech, zu biegen, das zwischen das Oberwerkzeug 46 und das als Gegenwerkzeug fungierende Unterwerkzeug 48 eingeführt worden ist.

Der räumliche Bereich, der sich ausgehend von dem Oberwerkzeug 46 in Richtung 56 des Unterwerkzeugs 48 erstreckt, bildet einen Gefahrenbereich für eine Bedienperson (Werker), die das Werkstück zwischen Oberwerkzeug 46 und Unterwerkzeug 48 einführt und dort in einer bestimmten Lage justiert und hält.

An den beiden Seiten der Gesenkbiegepresse 54, und zwar unmittelbar vor dem Gefahrenbereich, sind die Sendeeinheit 4 und Empfangseinheit 6 des Lichtgitters 1 angeordnet. Diese weisen die im Einzelnen nicht gezeigten Sendeelemente und Empfangselemente auf, um mehrere Lichtschranken zu bilden, die horizontal und aneinandergrenzend zwischen der Sendeeinheit 4 und der Empfangseinheit 6 verlaufen. Hierdurch wird ein Lichtgitter mit einem Überwachungsbereich 58 gebildet, der sich zwischen der Sendeeinheit 4 und der Empfangseinheit 6 einerseits und entlang der gesamten Höhe der Sendeeinheit 4 bzw. Empfangseinheit 6 andererseits in Form einer rechteckigen Fläche erstreckt.

Der Überwachungsbereich 58 des Lichtgitters dient zur Sicherung des Gefahrenbereichs gegen einen unzulässigen Eingriff des Werkers, um Verletzungen beispielsweise der Finger des Werkers durch das Oberwerkzeug 46 und das Unterwerkzeug 48 während des Schließvorgangs zu verhindern. Zu diesem Zweck kann der Überwachungsbereich 58 vollständig oder teilweise aktiviert werden. Dies bedeutet, dass für den betreffenden Teil des Überwachungsbereichs 58 Lichtstrahlen ausgesandt und auf Empfang überwacht werden, um bei Detektion einer Unterbrechung der betreffenden Lichtschranke ein Schaltsignal zu erzeugen, das zur Unterbrechung der Schließbewegung 56 des Oberwerkzeugs 46 führt.

Wie bereits erwähnt, ist es möglich, dass lediglich ein Teil des Überwachungsbereichs 58 aktiviert wird. Soweit es sich bei diesem aktivierten Teil des Überwachungsbereichs 58 um eine geschlossene Fläche handelt, wird er im Folgenden als Schutzfeld 10 bezeichnet. Aufgrund der für die praktische Verwirklichung besonders einfachen Anordnung der Sendeeinheit 4 und Empfangseinheit 6 in seitlicher Gegenüberstellung, erstreckt sich das Schutzfeld 10 stets in Form eines rechteckigen Streifens von der Sendeeinheit 4 zu der Empfangseinheit 6, mit einer horizontalen oberen Begrenzung 60 und einer horizontalen unteren Begrenzung 62.

Im Folgenden wird ein möglicher Ablauf des erfindungsgemäßen Verfahrens beschrieben:

Zu Beginn der Absenkbewegung 56 des Oberwerkzeugs 46, die während einer Schließbewegung mit erhöhter Geschwindigkeit erfolgt, wird der gesamte Teil des Überwachungsbereichs 58 als Schutzfeld 10 aktiviert. Wie aus Fig. 6 ersichtlich, beginnt das Schutzfeld 10 am unteren Teil des Oberwerkzeugs 46 und es erstreckt sich nach unten bis zum Unterwerkzeug 48. Allerdings ist zwischen dem Schutzfeld 10 und dem Unterwerkzeug 48 noch ausreichend Platz, um ein Werkstück in den Gefahrenbereich einführen bzw. dort ausrichten zu können.

Mit Beginn der Bewegung 56 des Oberwerkzeugs 46 nach unten, wird durch entsprechende Steuerung der in der Sendeeinheit 4 bzw. Empfangseinheit 6 enthaltenen Sendeelementen bzw. Empfangselementen auch das Schutzfeld 10 verkleinert, wie durch den durchgezogenen Pfeil 64 in Fig. 7 gezeigt. Diese Bewegung 64 des Schutzfeldes 10 erfolgt nicht nur in gleicher Richtung, sondern auch mit derselben Geschwindigkeit wie die Abwärtsbewegung 56 des Oberwerkzeugs 46. Hierzu ist der Steuereingang der Sendeeinheit bzw. Empfangseinheit beispielsweise mit einem Positionsgeber des Oberwerkzeuges 46 oder einem Steuerausgang der Maschinensteuerung verbunden.

Aufgrund dieser Bewegung 64 des Schutzfeldes 10 zu der schnellen Schließbewegung 56 des Oberwerkzeugs 46 verkleinert sich das Schutzfeld 10. Aufgrund des verkleinerten Schutzfeldes 10 verkleinert sich die notwendige Zeit für die Auswertung der einzelnen Empfangselemente und dadurch verringert sich die Ansprechzeit, um eine Abschaltung des Oberwerkzeuges 46 einzuleiten, abhängig von einem Eingriff in das Schutzfeld 10. Das heißt, je näher sich das Oberwerkzeug 46 dem Unterwerkzeug 48 nähert, desto gefährlicher wird einer mögliche Verletzungsgefahr für eine Bedienperson, aber desto schneller wird auch ein Eingriff erkannt und sicher eine Bewegung des Oberwerkzeuges 46 abgeschaltet.

### Bezugszeichenliste:

- 1: Lichtgitter
- 2: Lichtstrahlen
- 2': unterbrochene Lichtstrahlen
- 4: Sendeeinheit
- 6: Empfangseinheit
- 10: Schutzfeld
- 12: Objekt/Papierrolle
- 14: Person/Bedienperson
- 16: Bewegungsrichtung
- 18: Auswerteeinheit
- 20: Steuereinheit
- 22: Adressbus
- 24: Adress-/Datenbus
- 26, 28: Spannungsversorgung
- 30,: 32 Steuereingang
- 34: Transportvorrichtung
- 36: Sperrgitter
- 38, 38.1 - 38.6: Sendeelemente
- 40, 40.1- 40.6: Empfangselemente
- 42: Mittel zur Datenübertragung
- 44: Maschine
- 46: Oberwerkzeug
- 48: Unterwerkzeug
- 50: Fahrzeugkarosserie
- 52: Transporteinrichtung
- 54: Gesenkbiegepresse
- 56: Schließbewegung
- 58: Überwachungsbereich
- 60: horizontal obere Begrenzung
- 62: horizontal untere Begrenzung
- 64: Pfeil/Bewegung

- α: Winkel
- s: Überstand
- v: Geschwindigkeit
- t: Zeit

## Patentansprüche

1. Lichtgitter zur Absicherung eines Gefahrenbereiches einer Maschine (44) und zur Erkennung von Objekten (12), bestehend aus
- einer Sendeeinheit (4) mit einzelnen Sendeelementen (38) zum Aussenden einer Mehrzahl in einer Ebene verlaufender Lichtstrahlen (2),
- einer Steuereinheit (20) zur separaten Ansteuerung der einzelnen Sendeelemente (38)
- einer zur Sendeeinheit (4) beabstandeten Empfangseinheit (6) mit einzelnen Empfangselementen (40) zum Empfangen der Lichtstrahlen (2), wodurch zwischen der Sende- und Empfangseinheit (4, 6) ein Schutzfeld (10) definiert ist,
- einer Auswerteeinheit (18) zur separaten Ansteuerung und Auswertung der einzelnen Empfangselemente (40) und zur Ausgabe eines Schaltsignals bei Lichtstrahlunterbrechung,
**dadurch gekennzeichnet, dass**
- zur Auswahl wenigstens eines der Sendeelemente (38) ein Adressbus (22) vorhanden ist, der mit der Steuereinheit (20) und allen Sendeelementen (38) verbunden ist und
- zur Auswahl und Auswertung wenigstens eines der Empfangselemente (40) ein Adress- und Datenbus (24) oder ein kombinierter Adress-Datenbus (24) vorhanden ist, der mit der Auswerteeinheit (18) und allen Empfangselementen (40) verbunden ist und
- Mittel (42) vorhanden sind zur Datenübertragung zwischen der Steuereinheit (20) und der Auswerteeinheit (18).

2. Lichtgitter nach Anspruch 1, **dadurch gekennzeichnet, dass** die Steuereinheit (20) und/oder Auswerteeinheit (18) einen Steuereingang (30, 32) aufweist, und dass die Auswerteeinheit (18) derart ausgebildet ist, dass abhängig von einem Signal des Steuereingangs (32) nur bestimmte Empfangselemente (40) ansteuerbar und auswertbar sind und dass die Steuereinheit (20) derart ausgebildet ist, dass entsprechend den bestimmten Empfangselementen (40) nur die zugeordneten Sendeelemente (38) ansteuerbar sind.

3. Lichtgitter nach einem der vorhergehenden Ansprüche, **dadurch gekennzeichnet, dass** die Sendeelemente (38) bzw. Empfangselemente (40) zeitlich nacheinander ansteuerbar bzw. auswertbar sind.

4. Lichtgitter nach einem der vorhergehenden Ansprüche, **dadurch gekennzeichnet, dass** die Sendeelemente (38) bzw. Empfangselemente (40) gleichzeitig ansteuerbar bzw. auswertbar sind.

5. Lichtgitter nach einem der vorhergehenden Ansprüche, **dadurch gekennzeichnet, dass** die Mittel zur Datenübertragung (42) zur Übertragung mittels Funkübertragung oder zur optischen Übertragung ausgebildet sind.

6. Lichtgitter nach einem der vorhergehenden Ansprüche, **dadurch gekennzeichnet, dass** die Mittel zur Datenübertragung (42) zur leitungsgebundenen Übertragung mittels elektrischer Leitungen oder Lichtwellenleiter ausgebildet sind.

7. Verfahren zur Absicherung eines Gefahrenbereiches einer Maschine (44) und zur Erkennung von Objekten (12), wobei
- eine Mehrzahl in einer Ebene verlaufender Lichtstrahlen (2) ausgesendet wird,
- die Lichtstrahlen (2) separat voneinander ausgesendet werden,
- die Mehrzahl in der Ebene verlaufender Lichtstrahlen (2) empfangen wird, wodurch ein Schutzfeld (10) entsteht,
- die empfangenen Lichtstrahlen (2) separat voneinander ausgewertet werden und abhängig von einer Lichtstrahlunterbrechung (2') ein Schaltsignal ausgegeben wird,
**dadurch gekennzeichnet, dass**
- das Aussenden wenigstens eines Lichtstrahles (2) wahlfrei über einen Adressbus (22) erfolgt und
- der Empfang wenigstens eines Lichtstrahls wahlfrei über einen Adress- und Datenbus (24) oder einen kombinierten Adress-Datenbus (24) erfolgt und
- das Aussenden und Empfangen von Lichtstrahlen (2) koordiniert zueinander erfolgt.

8. Verfahren nach Anspruch 7, **dadurch gekennzeichnet, dass** zulässige Lichtstrahlunterbrechungen (2') eingelernt werden, abhängig von der Auswertung und Unterbrechung nur bestimmter Lichtstrahlen (2, 2') ein Schaltsignal ausgegeben wird und die Aussendung von Lichtstrahlen (2) und der Empfang bestimmter Lichtstrahlen (2) gesteuert wird.

9. Verfahren nach Anspruch 7 oder 8, **dadurch gekennzeichnet, dass** die Lichtstrahlen (2) zeitlich nacheinander ausgesendet werden und die empfangenen Lichtstrahlen (2) zeitlich nacheinander ausgewertet werden.
